# NEUE EUROPÄISCHE PATENTSCHRIFT

(11) **EP 0 327 869 B2**
(45) Veröffentlichungstag und Bekanntmachung des Hinweises auf die Entscheidung über den Einspruch: **25.09.1996**
(45) Hinweis auf die Patenterteilung: 07.11.1990
(21) Anmeldenummer: 89101087.8
(22) Anmeldetag: 23.01.1989
(51) Int. Cl.: A01B 49/06

(54) **Geschlossene Bestellkombination**
Cultivating and sowing combination
Machine combinée de culture et de semis

(30) Priorität: 08.02.1988 DE 3803723
(43) Veröffentlichungstag der Anmeldung: 16.08.1989
(73) Patentinhaber: Amazonen-Werke H. Dreyer GmbH & Co. KG, D-49205 Hasbergen (DE)
(72) Erfinder: Dreyer, Heinz, Dr., D-4507 Hasbergen (DE); Scheufler, Bernd, Dr., D-4507 Hasbergen (DE); Kemper, Martin, D-4506 Hagen a.TW (DE); Lührmann, Johannes, D-4512 Wallenhorst (DE); Nörenberg, Adolf, D-4531 Lotte (DE)
(74) Vertreter: Schuster, Thomas, Dipl.-Phys.

(56) Entgegenhaltungen:
- EP-A- 0 191 871
- EP-A- 0 201 135
- DE-A- 1 782 477
- DE-A- 2 634 688
- DE-U- 8 712 508
- FR-A- 2 342 015
- US-A- 4 509 438
- Ulmers Taschenhandbücher "Landtechnik", Band 1 "Feldwirtschaft", Seiten 133 - 142; Verlag Eugen Ulmer, Stuttgart, 1969
- Walter Feuerlein "Geräte zur Bodenbearbeitung", Seite 164, Abb. 210; Verlag Eugen Ulmer, Stuttgart, 1971

## Beschreibung

Die Erfindung betrifft eine geschlossene Bestellkombination gemäß des Oberbegriffes des Patentanspruches 1.

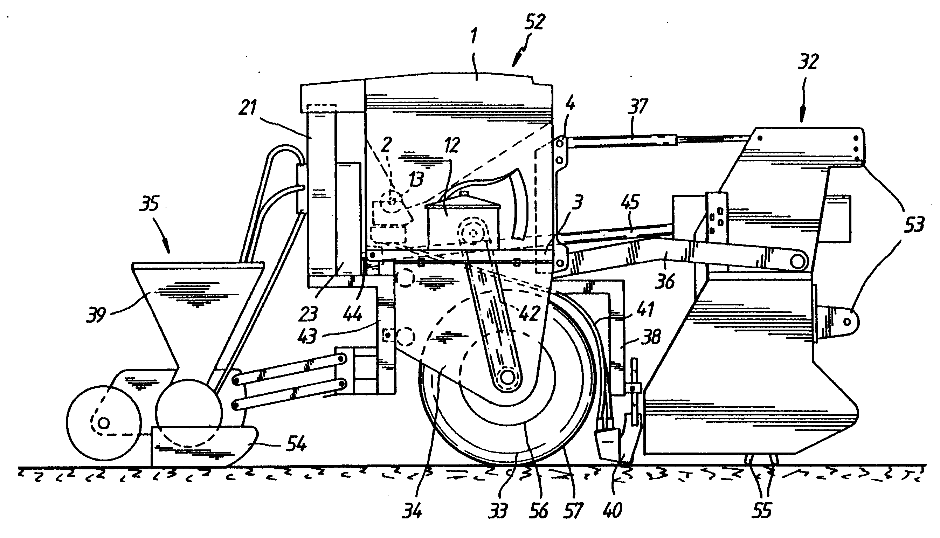

Eine derartige geschlossene Bestellkombination ist durch die deutsche Offenlegungsschrift 3 546 468 bekannt. Diese geschlossene Bestellkombination besteht gemäß Fig. 6 dieser Offenlegungsschrift aus einem Bodenbearbeitungsgerät, einer Nachlaufwalze einer dahinter angeordneten Düngerverteilmaschine mit Düngerbehälter und Düngersäscharen sowie einer anschließend angeordneten Einzelkornsämaschine mit einzelnen Sägeräten und Säscharen. Die Düngersäschare sind bei dieser Bestellkombination hinter der Nachlaufwalze angeordnet. Durch das vorlaufende Bodenbearbeitungsgerät, welches zapfwellenangetrieben ist, wird der Boden gelockert und gekrümelt. Durch die nachfolgende Nachlaufwalze wird der Boden wieder angedrückt, so daß ein ebenes und gleichmäßiges Saatbett entsteht. Durch die Düngersäschare wird anschließend eine tiefe Furche in den Boden gezogen, in welcher Dünger abgelegt wird. Durch diese Düngersäschare wird das ebene Saatbett wieder uneben, so daß die Säschare der Einzelkornsämaschine nicht mehr in einen ebenen Boden das Saatgut ablegen können. Weiterhin wird teilweise die Furche, welche von den Düngersäscharen in den Boden gezogen wird und in der das Düngemittel abgelegt ist, nicht in jedem Falle geschlossen.

Des weiteren ist von erheblichem Nachteil, daß die bekannte Bestellkombination sehr lang baut, so daß sich der Gesamtschwerpunkt der Kombination sehr weit hinten befindet. Damit die bekannte Kombination überhaupt von dem Dreipunktkrafheber eines Schleppers ausgehoben werden kann, ist zwischen dem Bodenbearbeitungsgerät und dem Düngerbehälter ein hydraulischer Hubrahmen angeordnet, so daß zum Ausheben der Maschine der Düngerbehälter mit der Einzelkornsämaschine in eine nach vorn-oben versetzte Lage verbracht werden kann. Hierdurch wird der Gesamtschwerpunkt in Richtung des Dreipunktkrafthebers des Schleppers verlagert.

Der Erfindung liegt die Aufgabe zugrunde, die bekannte Bestellkombination wesentlich zu verbessern.

Diese Aufgabe wird erfindungsgemäß durch das Merkmal des Patentanspruches 1 gelöst.

Infolge dieser Maßnahme wird die Voraussetzung einerseits dafür geschaffen, daß sich eine kompakte Bauweise der Bestellkombination ergibt und andererseits ein ebenes Saatbett für die Einbringung der Saat durch die Säschare der Einzelkornsämaschine in den Boden erreicht wird. Durch die Anordnung der Düngersäschare zwischen der Nachlaufwalze und dem Bodenbearbeitungsgerät ist es möglich, den Düngervorratsbehälter auf die Bodenwalze aufzuschieben und somit das Einzelkornsägerät dichter zum Bodenbearbeitungsgerät bzw. zum Schlepperkraftheber zu versetzen. Somit ergibt sich also kompakt bauende Bestellkombination. Darüber hinaus ergibt sich der entscheidende Vorteil durch die Anordnung der Düngersäschare zwischen der Nachlaufwalze und dem Bodenbarbeitungsgerät in der Weise, daß die von den Düngersäscharen gezogene Furche und die von den Düngersäscharen hierdurch hervorgerufene Bodenunebenheit wieder von der Nachlaufwalze eingeebnet werden. Des weiteren ergibt sich eine Leichtzügigkeit der Bestellkombination, da die Düngersäschare in einem lockeren und losen Bodenbereich arbeiten. Somit können also die Säschare der Einzelkorsämaschine in einem ebenen Saatbett die Saatkörner ablegen.

Somit wird also insgesamt erreicht, daß der von den Düngersäscharen erzeugte Säschlitz oder die Säfurche von der Nachlaufwalze in Verbindung mit dem Bodenbearbeitungsgerät wieder geschlossen und durch die Nachlaufwalze wieder angedrückt wird, und somit einem Ausschwemmen von Bodenteilen im Bereich der Säschlitze, besonders in starken errosionsgefährdeten Gebieten, entgegen gewirkt wird. Eine korrekte Schließung und Andrückung der von den Düngersäscharen erzeugten Säfurche wird also in jedem Falle sicher erreicht.

Durch die DE-A 2 634 688 ist eine geschlossene Gerätekombination bekannt, die aus einem zapfwellenangetriebenen Bodenbearbeitungsgerät, einer dem Bodenbearbeitungsgerät unmittelbar folgenden Nachlaufwalze, einer dahinter angeordneten Düngerverteilmaschine mit Düngerbehälter und Düngersäscharen, die hinter der dem Bodenbearbeitungsgerät unmittelbar folgenden Walze angeordnet sind, sowie einer hinter den Düngerscharen angeordneten zweiten Nachlaufwalze sowei Säscharen besteht. Von erheblichem Nachteil ist bei dieser bekannten Bestellkombination, daß die Düngerschare hinter der den Bodenbearbeitungswerkzeugen des Bodenbearbeitungsgerätes unmittelbar folgenden Walze angeordnet sind. Diese Düngersäschare arbeiten, wie beim gattungsbildenden Stand der Technik in einem von der Bodenwalze verfestigtem Bereich, so daß sich gerade hier auch die Nachteile wie beim gattungsbildenden Stand der Technik ergeben. Die hinter den Düngerscharen angeordnete zweite Nachlaufwalze ist nicht in der Lage die Furchen, die von den Düngerscharen in den Boden gerissen werden wieder zu schließen. Es ergibt sich also keine ebenes Saatbett, in denen die Säschare das Saatgut ablegen können.

In einer erfindungsgemäßen Ausführungsform ist erfindungsgemäß vorgesehen, daß die Bodenwalze aus mehreren nebeneinander angeordneten Gummireifen besteht, daß die Düngersäschare vor dem Gummireifen der Nachlaufwalze angeordnet sind, so daß die von den Düngersäscharen erzeugten Furchen durch die von den Bodenbearbeitungswerkzeugen des Bodenbearbeitungsgerätes bewegte Erde in Verbindung mit der Nachlaufwalze wieder geschlossen werden, so daß die Säschare der Einzelkornsämaschine in einem angedrückten und ebenen Saatbett arbeiten. Infolge dieser Maßnahmen wird in einfachster Weise in jedem Falle und bei allen Bodenverhältnissen und Bodenarten sichergestellt, daß die von den Düngersäscharen gezogene Furche geschlossen wird, und daß hinter der Bodenwalze ein ebenes Saatbett entsteht, welches optimal für die Einbringung des Saatgutes in das Saatbett ist.

Durch das DE-U 8 712 508 ist eine Nachlaufwalze bekannt, die aus nebeneinander angeordneten Gummireifen besteht. Die Düngerschare sind bei dieser bekannten Bestellkombination hinter den Gummireifen der Nachlaufwalze angeordnet.

Desweiteren ist durch die EP-A 0 191 871 eine Bodenwalze bekannt geworden die verfestigte Streifen in den Boden drückt. In diesen verfestigten Streifen arbeiten die Säschare.

Weitere Einzelheiten der Erfindung sind den übrigen Unteransprüchen, der Beispielsbeschreibung und der Zeichnung zu entnehmen. Hierbei zeigt die Zeichnung eine erfindungsgemäß ausgebildete Bestellkombination in der Seitenansicht.

Die Bestellkombination besteht aus dem Bodenbearbeitungsgerät 32, der Nachlaufwalze 33, der Düngerverteilmaschine 52 und einer Einzelkornsämaschine 35. Die Bodenbearbeitungsmaschine 32 weist auf ihrer Vorderseite die Dreipunktkupplungselemente 53 zum Anschluß an einen Schlepperkraftheber auf. Die Bodenbearbeitungsmaschine 32 ist als zapfwellenangetriebes Bodenbearbeitungsgerät (Kreiselegge) ausgebildet. Der Düngervorratsbehälter 1 der Düngerverteilmaschine 52 ist mit seinem Rahmen 3 auf die Nachlaufwalze 33 des Bodenbearbeitungsgerätes 32 aufgesetzt, und über die Tragarme 36 und den Oberlenker 37 mit dem Bodenbarbeitungsgerät 32 verbunden. Der Rahmen 3 weist die Dreipunktkupplungselemente 4 auf. Die Nachlaufwalze 33 weist den Rahmen 34 auf, an welchem der Düngervorratsbehälter 1 und die Einzelkornsämaschine 35 befestigt sind. Die Einzelkornsämaschine 35 weist mehrere nebeneinander angeordnete Einzelkornsäaggregate 39 auf. Jedes Einzelkornsäaggregat 39 besitzt das Säschar 54. Jedem Säschar 54 bzw. Einzelkornsäaggregat 39 ist ein Düngersäschar 40 zugeordnet. Die Düngersäschare 40 sind über Haltearme 38 am Rahmen 34 der Nachlaufwalze 33 befestigt. Die Düngersäschare 40 sind zwischen der Nachlaufwalze 33 und dem Bodenbearbeitungsgerät 32 angeordnet, so daß die Düngersäschare 40 sich vor der Nachlaufwalze 33 befinden. Den Düngersäscharen 40 werden die sich im Düngervorratsbehälter 1 befindlichen Düngemittel über die Dosierorgane 2, welche auf der Dosierwelle 13 angeordnet sind, in genau einstellbaren Mengen über die Düngerleitungen 41 zugeführt. Das für die Einstellung der Düngerausbringmenge notwendige Ölbadgetriebe 12 wird über den Kettentrieb 42 von der Nachlaufwalze 33 angetrieben. Dadurch, daß die Düngersäschare 40 vor der Nachlaufwalze 33 angeordnet sind, wird erreicht, daß die von den Düngersäscharen 40 in den Boden gezogenen Säschlitze oder Furchen wieder ordnungsgemäß verschlossen und rückverfestigt werden. Die Düngersäschare 40 befinden sich in einem Bereich, in welchem der von den Bodenbearbeitungswerkzeugen 55 der Bodenbearbeitungsmaschine 32 gelockerte Boden sich befindet. Somit werden die von den Düngersäscharen 40 erzeugten Furchen durch die von den Bodenbearbeitungswerkzeugen 55 des Bodenbearbeitungsgerätes 32 bewegte Erde in Verbindung mit der Nachlaufwalze 33 wieder geschlossen, so daß die Säschare 54 der Einzelkornsämaschine 35 in einem von der Nachlaufwalze 33 angedrückten und ebenen Saatbett arbeiten.

Die Einzelkornsämaschine 35 mit ihren nebeneinander angeordneten Einzelkornsäaggregaten 39 weist das Saugluftgebläse 21 sowie das Vorgelegegetriebe 23 auf, und ist über die Halterung 43 mit dem Rahmen 34 bzw. mit dem Rahmen 3 des Düngervorratsbehälter 1 verbunden. Der Antrieb des Saugluftgebläses 21 erfolgt über das Vorlegegetriebe 23, welches von der zwischen der Antriebswelle 44 des Vorgelegegetriebes 23 und der Ausgangswelle des Getriebes des Bodenbearbeitungsgerätes 32 angeordneten Gelenkwelle 45 angetrieben wird.

Die Nachlaufwalze 33 besteht aus den mehreren nebeneinander auf einem Tragrohr 56 angeordneten Gummireifen 57. Hierbei können die Gummireifen 57 so angeordnet sein, daß sich jeweils ein Gummireifen 57 hinter einem Düngersäschar 40 befindet. Es ist jedoch auch möglich, daß die Düngersäschare in Fahrtrichtung gesehen so angeordnet sind, daß sie sich jeweils zwischen zwei benachbarten Gummireifen 57 der Nachlaufwalze 53 befinden.

Das jeweilige Säschar 54 der Einzelkornsäaggregate 39 der Einzelkornsämaschine 35 kann so angeordnet sein, daß das jeweilige Säschar 54 der Einzelkornsämaschine 35 jeweils fluchtend hinter einem Gummireifen 57 angeordnet ist, so daß es im vom Gummireifen 57 verfestigten Bereich arbeitet.

Die Nachlaufwalze 33 kann auch als Packer oder Stabwalze ausgebildet sein.

## Patentansprüche

1. Geschlossene Bestellkombination, bestehend aus einem zapfwellenangetriebenen Bodenbearbeitungsgerät (32), einer dem Bodenbearbeitungsgerät unmittelbar folgenden Nachlaufwalze (33), einer dahinter angeordneten Düngerverteilmaschine (52) mit Düngerbehälter (1) und Düngersäscharen (40) und einer Einzelkornsämaschine (35) dadurch gekennzeichnet, daß die Düngersäschare (40) unmittelbar hinter den Bodenbearbeitungswerkzeugen (55) des Bodenbearbeitungsgerätes (32) vor der dem Bodenbearbeitungsgerät unmittelbar folgenden Nachlaufwalze (33) angeordnet sind, so daß die Von den Düngersäscharen (40) erzeugten Furchen durch die von den Bodenbearbeitungswerkzeugen (55) des Bodenbearbeitungsgerätes (32) bewegte Erde in Verbindung mit der dem Bodenbearbeitungsgerät unmittelbar folgenden Nachlaufwalze (33) wieder geschlossen werden, so daß die Säschare (54) der Einzelkornsämaschine (35) in einem angedrückten und ebenen Saatbett hinter der dem Bodenbearbeitungsgerät unmittelbar folgenden Nachlaufwalze arbeiten.

2. Bestellkombination nach Anspruch 1, dadurch gekennzeichnet, daß die Bodenwalze (33) aus mehreren nebeneinander angeordneten Gummireifen (57) besteht, daß die Düngersäschare vor dem Gummireifen (57) der Nachlaufwalze (33) angeordnet sind, so daß die von den Düngersäscharen (40) erzeugten Furchen durch die von den Bodenbearbeitungswerkzeugen (55) des Bodenbearbeitungsgerätes (32) bewegte Erde in Verbindung mit der Nachlaufwalze (33) wieder geschlossen werden, so daß die Säschare (54) der Einzelkornsämaschine (35) in einem angedrückten und ebenen Saatbett arbeiten.

3. Bestellkombination nach einem oder mehreren der vorstehenden Ansprüche, dadurch gekennzeichnet, daß die Düngersäschare (40) seitlich versetzt zu den Säscharen (54) der Einzelkornsämaschine (35) angeordnet sind.

4. Bestellkombination nach Anspruch 2, dadurch gekennzeichnet, daß jeweils ein Gummireifen (57) hinter einem Düngersäschar (40) angeordnet ist.

5. Bestellkombination nach Anspruch 2, dadurch gekennzeichnet, daß die Düngersäschare (40) in Fahrtrichtung gesehen jeweils zwischen zwei benachbarten Gummireifen (57) angeordnet sind.

6. Bestellkombination nach Anspruch 2, dadurch gekennzeichnet, daß das jeweilige Säschar (54) der Einzelkornsämaschine (35) fluchtend hinter einem Gummireifen (57) angeordnet ist, so daß es im vom Gummireifen (57) verfestigten Bereich arbeitet.

## Claims

1. Compact material delivering combination, comprising a shaft driven ground cultivating machine (32) a follower roller (33) which immediately follows the ground cultivating machine, a fertilizer distributing machine (52), which is disposed therebehind and is provided with a fertilizer hopper (1) and fertilizer sowing coulters (40), and a seed drill (35) for dispensing individual grains, characterized in that the fertilizer sowing coulters (40) immediately behind the ground cultivating tools (55) of the ground cultivating machine (32) are disposed in front of the follower roller (33) so that the furrows which are produced by the fertilizer sowing coulters (40), are closed again by the earth, which has been moved by the ground cultivating tools (55) of the ground cultivating machine (32), in conjunction with the follower roller (33), which immediately follows the ground cultivating machine so that the sowing coulters (54) of the seed drill (35) for dispensing individual grains operate in a compressed and flat seed bed behind the follower roller, which immediately follows the ground cultivating machine.

2. Material-delivering combination according to claim 1, characterized in that the ground roller (33) includes a plurality of rubber tires (57), which are disposed adjacent one another, and the fertilizer sowing coulters are disposed in front of the rubber tires (57) of the follower roller (33), so that the furrows, which are produced by the fertilizer sowing coulters (40), are closed again by the earth, which has been moved by the ground cultivating tools (55) of the ground cultivating machine (32), in conjunction with the follower roller (33), so that the sowing coulters (54) of the seed drill (35) for dispensing individual grains operate in a compressed and flat seed bed.

3. Material-delivering combination according to one or more of the preceding claims, characterized in that the fertilizer sowing coulters (40) are disposed in a laterally offset manner relative to the sowing coulters (54) of the seed drill (35) for dispensing individual grains.

4. Material-delivering combination according to claim 2, characterized in that one rubber tire (57) is disposed behind each fertilizer sowing coulter (40).

5. Material-delivering combination according to claim 2, characterized in that, when viewed with respect to the direction of travel, each of the fertilizer sowing coulters (40) is disposed between two adjacent rubber tires (57).

6. Material-delivering combination according to claim 2, characterized in that each particular sowing coulter (54) of the seed drill (35) for dispensing individual grains is disposed in alignment behind a respective rubber tire (57), so that it operates in the area compacted by the rubber tire (57).

## Revendications

1. Machine combinée de culture et de semis constituée par un appareil de culture du sol (32), entraîné par la prise de force, par un rouleau suiveur (33) suivant immédiatement l'appareil de culture du sol, par une machine de répartition d'engrais (52) disposée à la suite, avec un réservoir d'engrais (1) et des socs de semis d'engrais (40), et une machine de semis de graines individuelles (35), machine combinée caractérisée en ce que
les socs de semis d'engrais (40) sont disposés immédiatement derrière les outils de culture du sol (55) de l'appareil de culture du sol (32) devant le rouleau suiveur (33) pour refermer les sillons tracés par les socs de semis d'engrais (40) par la terre déplacée par les outils de culture du sol (55) de l'appareil de culture du sol (32), en association avec le rouleau suiveur (33) suivant immédiatement l'appareil de culture du sol, de sorte que les socs de semis (54) de la machine de semis de graines individuelles (35) travaillent dans un lit de semence plan et compacté derrière le rouleau suiveur, suivant immédiatement l'appareil de culture du sol.

2. Machine combinée de culture et de semis selon la revendication 1,
caractérisée en ce que
le rouleau (33) est constitué par plusieurs pneus en caoutchouc (57) disposés les uns à côté des autres, les socs de semis d'engrais étant disposés devant les pneus en caoutchouc (57) du rouleau suiveur (33), de sorte que les sillons tracés par les socs de semis d'engrais (40) sont refermés par la terre déplacée par les outils de culture du sol (55) de l'appareil de culture du sol (32) en association avec le rouleau suiveur (33), de sorte que les socs de semis (54) de la machine de semis de graines individuelles (35) travaillent dans un lit de semence plan et compacté.

3. Machine combinée de culture et de semis selon une ou plusieurs des précédentes revendications,
caractérisée en ce que
les socs de semis d'engrais (40) sont décalés latéralement par rapport aux socs de semis (54) de la machine de semis de graines individuelles (35).

4. Machine combinée de culture et de semis selon la revendication 2,
caractérisée en ce qu'
un pneu en caoutchouc (57) est respectivement disposé derrière un soc de semis d'engrais (40).

5. Machine combinée de culture et de semis selon la revendication 2,
caractérisée en ce que
les socs de semis d'engrais (40), vus dans la direction de déplacement, sont respectivement disposés entre deux pneus en caoutchouc (57) voisins.

6. Machine combinée de culture et de semis selon la revendication 2,
caractérisée en ce qu'
un chacun des socs de semis (54) de la machine de semis de graines individuelles (35) est disposé en alignement derrière un pneu en caoutchouc (57), de sorte que ce soc travaille dans une zone compactée par le pneu en caoutchouc (57).
